(19) Europäisches Patentamt
European Patent Office
Office européen des brevets

(11) **EP 3 620 609 A1**

(12) **EUROPEAN PATENT APPLICATION**

(43) Date of publication:
**11.03.2020 Bulletin 2020/11**

(21) Application number: **19189984.8**

(22) Date of filing: **05.08.2019**

(51) Int Cl.:
*F01D 5/14* (2006.01)  *F01D 5/16* (2006.01)
*F01D 25/00* (2006.01)  *F04D 29/66* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.09.2018 GB 201814410**

(71) Applicant: **Rolls-Royce plc
London N1 9FX (GB)**

(72) Inventors:
• **Clark, Daniel**
  **Derby, Derbyshire DE24 8BJ (GB)**
• **Novovic, Donka**
  **Derby, Derbyshire DE24 8BJ (GB)**
• **Winton, Peter**
  **Derby, Derbyshire DE24 8BJ (GB)**

(74) Representative: **Rolls-Royce plc
Intellectual Property Dept SinA-48
PO Box 31
Derby DE24 8BJ (GB)**

(54) **METHOD OF FILLING AN INTERNAL CAVITY OF A COMPONENT, CAPSULE FOR USE IN SAID METHOD, AND AEROFOIL COMPONENT**

(57)    A method of filling an internal cavity of a component for a machine with viscoelastic damping medium and/or insulating medium comprises pumping a plurality of capsules into the internal cavity using a peristaltic pump. Each capsule comprises a flexible skin encapsulating a viscoelastic damping medium, one or more viscoelastic damping medium precursors, an insulating medium, or one or more insulating medium precursors. A capsule for use in the method and an aerofoil component for a gas turbine engine are also provided.

Fig. 2

EP 3 620 609 A1

## Description

## Field

The present disclosure concerns methods of filling components with viscoelastic damping media and/or insulating media, capsules for use in such methods, and components such as fan blades or guide vanes at least partially filled with viscoelastic damping media and/or insulating media.

## Background

Many machine components are subject to vibrations in use. For example, fast and turbulent air flows in a gas turbine engine can cause engine components, such as fan blades or guide vanes, to vibrate strongly with multiple modes of resonance. Many machine components, such as gas turbine engine components, are also subject to elevated temperatures in use.

Vibration of machine components can lead both to noise generation and structural damage to the components. For example, cyclic loading of components (and, in particular, metal components) can lead to the initiation and growth of fatigue cracks, which can in some cases result in component failure.

One way to reduce vibrational resonance of a machine component is to fill an internal cavity of the component with a viscoelastic damping medium designed to dissipate vibrational energy. However, the viscoelastic properties of the medium can make it difficult to fill a component or to control the distribution of the viscoelastic damping medium within the cavity. It can also be difficult to fill a component with viscous materials such as insulating media.

## Summary of disclosure

According to a first aspect, there is provided a method of filling an internal cavity of a component for a machine with a viscoelastic damping medium or an insulating medium, the method comprising: pumping a plurality of capsules into the internal cavity using a peristaltic pump; wherein each capsule comprises a flexible skin encapsulating viscoelastic damping medium, one or more viscoelastic damping medium precursors, insulating medium, or one or more insulating medium precursors.

It will be appreciated that viscoelastic materials are materials which exhibit aspects of both viscous and elastic behaviour in response to applied stresses.

Viscosity is the resistance to gradual deformation (i.e. flow) exhibited by materials when subjected to stress and can be thought of as a measure of internal friction between molecules or the "thickness" of the material. More precisely, viscosity, $\mu$, can be defined in terms of the applied shear stress, $\tau$, and the rate of shear deformation or shear velocity, $\frac{\partial u}{\partial y}$, in a flowing material as:

$$\tau = \mu \frac{\partial u}{\partial y}$$

That is to say, the shear stress is proportional to the shear rate and the constant of proportionality is the viscosity.

Elasticity is the ability of a material to resist deformation when subjected to an applied stress and to return to its original size and shape when the stress is removed. Elasticity of a material can be quantified in terms of different elastic constants or moduli dependant on the type of stress which is applied to the material (for example, tensile stress, shear stress or hydrostatic pressure). For example, the shear modulus, $G$, of a linearly elastic material can be defined in terms of the applied shear stress, $\tau$, and resultant shear strain, $\gamma$, as:

$$\tau = G\gamma$$

That is to say, the shear stress is proportion to the shear strain, and the constant of proportionality is the elastic shear modulus.

Viscoelastic materials exhibit aspects of both viscous and elastic behaviour in that the shear stress is a function of both the shear strain and the shear rate and, accordingly, viscoelastic materials exhibit a time-dependent strain in response to an applied stress. For example, viscoelastic fluids can briefly behave like elastic solids when subjected to sudden stresses and viscoelastic solids can flow, even under small stresses, over long time periods. Indeed, the boundary between viscoelastic fluids and viscoelastic solids may not be clear-cut.

The viscoelasticity of a material can be characterised using dynamic mechanical analysis, in which a small, oscillatory stress is applied to the material and the resulting strain is measured. In an ideal elastic solid, the shear stress and shear strain curves will be precisely in phase with one another; the strain is not time-dependent. In an ideal viscous liquid, the strain curve will be out of phase with the stress curve by 90°. In contrast, viscoelastic materials exhibit phase differences intermediate 0° and 90°. This type of mechanical response causes viscoelastic materials to dissipate energy when strained and so hysteresis is seen in the stress-strain curves of viscoelastic materials. Consequently, viscoelastic materials can be effective vibration damping media.

Many viscoelastic materials are polymeric. In particular, many amorphous or semicrystalline polymers, for example elastomers, are viscoelastic when above their glass transition temperatures. The viscoelastic behaviour in such materials results from a combination of elastic interatomic bond stretching and time-dependent molecular rearrangement (e.g. polymer chain uncoiling and recoiling) in response to stress.

Accordingly, viscoelastic damping media may comprise viscoelastic solids or viscoelastic fluids, e.g., viscoelastic liquids. Viscoelastic damping media may be formed from one or more viscoelastic damping medium precursors, for example, by chemical reactions between two or more viscoelastic damping medium precursors or by chemical transformation of one or more viscoelastic damping medium precursors in response to a stimulus, for example, exposure to radiation or a catalyst. Viscoelastic damping media may be formed by curing one or more viscoelastic damping medium precursors, for example, by application of heat and/or pressure and/or exposure to curing agents.

Viscoelastic damping medium precursors may themselves comprise viscoelastic materials. Nevertheless, even if viscoelastic damping medium precursors do not comprise viscoelastic materials in an uncured state, viscoelastic damping medium precursors are commonly viscous.

Insulating media may be thermally insulating media. Insulating media (i.e. thermally insulating media) may have thermal conductivities (for example, when measured at 20°C) of less than or equal to about 100 $Wm^{-1}K^{-1}$, for example, or less than or equal to about 50 $Wm^{-1}K^{-1}$, for example, less than or equal to about 25 $Wm^{-1}K^{-1}$, or less than or equal to about 10 $Wm^{-1}K^{-1}$, or less than or equal to about 5 $Wm^{-1}K^{-1}$, or less than or equal to about 1 $Wm^{-1}K^{-1}$, or less than or equal to about 0.5 $Wm^{-1}K^{-1}$. Additionally or alternatively, insulating media may be electrically insulating media. Insulating media (i.e. electrically insulating media) may have electrical resistivities (for example, when measured at 20°C) of greater than or equal to about $1\times10^5$ $\Omega$m, for example, greater than or equal to about $1\times10^{10}$ $\Omega$m, or greater than or equal to about $1\times10^{11}$ $\Omega$m, or greater than or equal to about $1\times10^{12}$ $\Omega$m, or greater than or equal to about $1\times10^{13}$ $\Omega$m, or greater than or equal to about $1\times10^{14}$ $\Omega$m, or greater than or equal to about $1\times10^{15}$ $\Omega$m.

Insulating media may be solid. Insulating media may be liquid. Insulating media may comprise mixtures (e.g. suspensions) of one or more solids and one or more liquids. Insulating media may comprise a high volume fraction of solids, for example, greater than or equal to about 50 %, or greater than or equal to about 60 %, or greater than or equal to about 70 %, or greater than or equal to about 80 %, or greater than or equal to about 90 %, or greater than or equal to about 95 %, of solids by volume. Insulating media may comprise (e.g. be) viscous liquids, for example, highly viscous liquids.

Insulating media may be formed from one or more insulating medium precursors, for example, by chemical reaction between two or more insulating medium precursors or by chemical transformation of one or more insulating medium precursors in response to a stimulus, for example, exposure to radiation or a catalyst.

Insulating media may be formed by curing one or more insulating medium precursors, for example, by application of heat and/or pressure and/or exposure to curing agents.

Insulating medium precursors may comprise (e.g. be) liquids. Insulating medium precursors may comprise (e.g. be) viscous liquids. Insulating medium precursors may comprise solids. Insulating medium precursors may comprise mixtures of one or more solids and one or more liquids. For example, insulating medium precursors may comprise insulating solids dispersed (e.g. suspended) in a liquid (e.g. thereby forming a slurry or a paste of insulating solids). For example, insulating medium precursors may comprise an insulating filler, such as an insulating mineral filler, dispersed (e.g. suspended) in a liquid (e.g. thereby forming a slurry or a paste of insulating filler). The liquid may be an inert carrier liquid. Forming an insulating medium from the one or more insulating medium precursors may comprise removal (e.g. evaporation) of the inert carrier liquid or solidification of the inert carrier liquid, resulting in a local increase in the volume fraction of solids. Alternatively, the liquid may comprise one or more constituents which assist in forming the insulating medium, for example, by chemical reaction of the said one or more constituents with one another and/or with the insulating solids. For example, the liquid may be curable to form a solid network around the insulating solids.

Viscoelastic damping media, viscoelastic damping medium precursors, insulating media and insulating medium precursors can be difficult to pump due to their viscosity and/or viscoelastic behaviour. The applicant has found that it can therefore be difficult to fill internal cavities of components with viscoelastic damping media, viscoelastic damping medium precursors, insulating media or insulating medium precursors. Difficulty in pumping viscoelastic damping media, viscoelastic damping medium precursors, insulating media or insulating medium precursors into an internal cavity may be due to high levels of friction between the flowing viscous or viscoelastic material and interior walls of the cavity as well as high levels of internal friction (i.e. viscosity) within the fluid itself. The inventors have found that it is easier to pump a plurality of capsules encapsulating viscoelastic damping medium, one or more viscoelastic damping medium precursors, insulating medium or one or more insulating medium precursors into the internal cavity using a peristaltic pump than it is to pump the materials directly into the internal cavity without encapsulation. Without wishing to be bound by theory, it is believed that pumping is facilitated by the reduction in friction between the external surfaces of the capsules and the interior walls of the internal cavity. Filling of internal cavities having complex geometries, large interior wall surface areas, or rough interior wall surfaces, is therefore easier, faster and more complete compared to filling directly with the viscoelastic damping medium, the viscoelastic damping medium precursors, the insulating medium or the insulating medium precursors.

The plurality of capsules may comprise at least two different types of capsule having differing contents. For example, the plurality of capsules may comprise at least two different types of capsule containing different viscoelastic damping media or viscoelastic damping medium precursors. The plurality of capsules may comprise at least two different types of capsule, one type containing viscoelastic damping media or viscoelastic damping medium precursors and another type containing insulating media or insulating medium precursors. Additionally or alternatively, the contents of the at least two different types of capsule may differ in terms of other capsule contents.

The plurality of capsules may comprise capsules of at least two different sizes. For example, the plurality of capsules may comprise at least two different types of capsule differing in length, width, thickness, volume and/or surface area.

The method may comprise: directing placement of the capsules inside the internal cavity using a positioning aid. The positioning aid may comprise a guide, for example, a movable guide, attached to or forming part of (e.g. a distal end of) the peristaltic pump. The positioning aid may comprise a viewing or imaging device, optionally comprising a light source. For example, the positioning aid may comprise (e.g. be) a borescope.

The peristaltic pump may comprise a tube and the method may comprise pumping the plurality of capsules into the internal cavity through the tube. The method may comprise pumping the plurality of capsules into the internal cavity through the tube extending through an aperture in an external wall of the component.

The positioning aid may be located at a distal end of the tube. The positioning aid may comprise a guide located at a distal end of the tube. The tube may be flexible. The guide may be flexible or rigid. The guide may be curved. The guide may be spoon-shaped, for example, like a shoehorn. The guide may have a curved distal end, similar to a hockey stick. The guide may be (e.g. telescopically) extendible or retractable.

The peristaltic pump may comprise one or more controls for controlling movement of the tube inside the internal cavity. For example, one or more cables may extend along the length of the tube and movement of the tube may be controlled by tightening or loosening the one or more cables.

It may be that the plurality of capsules comprises two or more different types of capsule, each type of capsule containing viscoelastic damping medium having a different shear modulus or being curable to form a viscoelastic damping medium having a different shear modulus.

It may be that the plurality of capsules comprises low shear modulus capsules and high shear modulus capsules. The low shear modulus capsules may have contents which (a) have a lower shear modulus than the contents of the high shear modulus capsules or (b) are curable to form a viscoelastic damping medium having a lower shear modulus than the viscoelastic damping medium formed on curing the contents of the high shear modulus capsules when subject to the same curing process (e.g. the same curing conditions). For example, it may be that (a) the shear modulus of the viscoelastic damping medium contained by the low shear modulus capsules is lower than the shear modulus of the viscoelastic damping medium contained by the high shear modulus capsules or (b) the shear modulus of the viscoelastic damping medium formed on curing the one or more viscoelastic damping medium precursors contained by the low shear modulus capsules is lower than the shear modulus of the viscoelastic damping medium formed on curing the one or more viscoelastic damping medium precursors contained by the high shear modulus capsules when subject to the same curing process. It may be that the shear modulus of the contents of the low shear modulus capsules, or of the viscoelastic medium formed on curing the contents of the low shear modulus capsules, is no greater than 90 %, for example, no greater than 80 %, or no greater than 70 %, or no greater than 60 %, or no greater than 50 %, of the shear modulus of the contents of the high shear modulus capsules, or of the viscoelastic medium formed on curing the contents of the high shear modulus capsules when subject to the same curing process.

The method may comprise: arranging capsules inside the internal cavity dependent on the contents and/or size of the capsules. For example, the method may comprise: grouping capsules within the internal cavity based on the contents and/or size of the capsules.

It may be that the internal cavity comprises a first region and a second region. The first region and the second region may be non-overlapping regions. The method may comprise: arranging capsules of a first type in the first region; and arranging capsules of a second type in the second region. For example, the method may comprise: arranging capsules having first contents in the first region; and arranging capsules having second contents, different from the first contents, in the second region. Additionally or alternatively, the method may comprise: arranging capsules having a first size in the first region; and arranging capsules having a second size, different from the first size, in the second region.

The method may comprise: arranging low shear modulus capsules in the first region; and arranging high shear modulus capsules in the second region.

The method may comprise: arranging capsules containing viscoelastic damping medium or one or more viscoelastic damping medium precursors in the first region; and arranging capsules containing insulating medium or one or more insulating medium precursors in the second region.

It may be that the internal cavity comprises an inner region and an outer region. The outer region may be (i.e. located) adjacent an interior wall of the internal cavity. The interior wall may extend around the internal cavity. The interior wall may form a boundary of the internal cavity. The internal cavity may be formed within (i.e. enclosed by) the interior wall. The internal cavity may be formed between (i.e. enclosed by) two or more such interior walls. The outer region may surround the inner region. The inner region may comprise a centre of the internal cavity.

The method may comprise: arranging capsules of a first type in one of the inner region and the outer region; and arranging capsules of a second type in the other of the inner region and the outer region. For example, the method may comprise: arranging capsules having first contents in one of the inner region and the outer region; and arranging capsules having second contents, different from the first contents, in the other of the inner region and the outer region. Additionally or alternatively, the method may comprise: arranging capsules having a first size in one of the inner region and the outer region; and arranging capsules having a second size, different from the first size, in the other of the inner region and the outer region.

The method may comprise: arranging low shear modulus capsules in one of the inner region and the outer region; and arranging high shear modulus capsules in the other of the inner region and the outer region. For example, the method may comprise: arranging low shear modulus capsules in the outer region; and arranging high shear modulus capsules in the inner region. Alternatively, the method may comprise arranging low shear modulus capsules in the inner region; and arranging high shear modulus capsules in the outer region.

The method may comprise: arranging capsules containing viscoelastic damping medium or one or more viscoelastic damping medium precursors in the inner region; and arranging capsules containing insulating medium or one or more insulating medium precursors in the outer region.

The method may comprise: arranging larger capsules in one of the inner region and the outer region; and arranging smaller capsules in the other of the inner region and the outer region. For example, the method may comprise: arranging larger capsules in the outer region; and arranging smaller capsules in the inner region. Alternatively, the method may comprise arranging larger capsules in the inner region; and arranging smaller capsules in the outer region.

The viscoelastic damping medium contained by the capsules, or formed on curing the one or more viscoelastic damping medium precursors contained by the capsules, may have a shear modulus of from about 0.5 MPa to about 100 MPa.

The plurality of capsules may comprise capsules containing a plurality of stiffening elements. The stiffening elements may be dispersed in the viscoelastic damping medium, one or more viscoelastic damping medium precursors, insulating medium, or one or more insulating medium precursors contained by the capsules.

The stiffening elements may be solid. The stiffening elements may be elastic. The stiffening elements may be viscoelastic. The stiffening elements may have a higher shear modulus (i.e. the stiffening elements may be formed from materials having a higher shear modulus) than the shear modulus of the viscoelastic damping medium or insulating medium contained by the capsules or formed from the one or more viscoelastic damping medium precursors or one or more insulating medium precursors contained by the capsules. The shear modulus of the stiffening elements (i.e. the shear modulus of the materials from which the stiffening elements are formed) may be at least 125 %, for example, at least 150 %, or at least 175 %, or at least 200 %, of the shear modulus of the viscoelastic damping medium or insulating medium contained by the capsules or formed from the one or more viscoelastic damping medium precursors or one or more insulating medium precursors contained by the capsules.

The stiffening elements may comprise solid particles or beads. Some or all of the stiffening elements may be substantially spherical in shape. Additionally or alternatively, some or all of the stiffening elements may have more complex three-dimensional shapes. For example, some or all of the stiffening elements may have dendritic (e.g. branched, spikey, tree-like, brush-like or snowflake-like) shapes. Some or all of the stiffening elements may be substantially spiral or helical in shape, for example, similar to helical springs. Some or all of the stiffening elements may have multiple protrusions or spikes, for example, they may be shaped like spheres covered with protrusions or spikes. Some or all of the stiffening elements may be stiffening webs.

The stiffening elements may comprise (e.g. be formed from) polymeric materials. Additionally or alternatively, the stiffening elements may comprise (e.g. be formed from) glass.

The stiffening elements may comprise (e.g. be formed from) one or more compressible materials, for example, one or more elastomeric polymers.

The method may comprise: arranging capsules containing stiffening elements in the first region; and arranging capsules lacking stiffening elements in the second region.

The method may comprise: arranging capsules containing stiffening elements in one of the inner region and the outer region; and arranging capsules lacking stiffening elements in the other of the inner region and the outer region. For example, the method may comprise: arranging capsules containing stiffening elements in the outer region; and arranging capsules lacking stiffening elements in the inner region. Alternatively, the method may comprise: arranging capsules containing stiffening elements in the inner region; and arranging capsules lacking stiffening elements in the outer region.

The method may comprise: arranging capsules each containing more stiffening elements in the first region; and arranging capsules each containing fewer stiffening elements in the second region. The method may comprise: arranging capsules each containing more stiffening elements in one of the inner region and the outer region; and arranging capsules each containing fewer stiffening elements in the other of the inner region and the outer region. For example, the method may comprise: arranging capsules each containing more stiffening elements in the outer region; and arranging each capsules containing fewer stiffening elements in the inner region. Alternatively, the method may comprise: arranging capsules each containing more stiffening elements in the inner region; and arranging capsules each containing fewer stiffening elements in the outer region.

The method may comprise: arranging capsules containing a larger volume fraction of stiffening elements in the first region; and arranging capsules containing a smaller volume fraction of stiffening elements in the second region. The method may comprise: arranging capsules containing a larger volume fraction of stiffening elements in one of the inner region and the outer region; and arranging capsules containing a smaller volume fraction of stiffening elements in the other of the inner region and the outer region. For example, the method may comprise: arranging capsules containing a larger volume fraction of stiffening elements in the outer region; and arranging capsules containing a smaller volume fraction of stiffening elements in the inner region. Alternatively, the method may comprise: arranging capsules containing a larger volume fraction of stiffening elements in the inner region; and arranging capsules containing a smaller volume fraction of stiffening elements in the outer region.

One or more of the capsules may comprise a sensor, for example, a temperature sensor or a position and/or motion sensor such as an accelerometer. The one or more capsules comprising a sensor may further comprise an energy harvesting device, for example, for harvesting energy from mechanical vibrations of the component to power the sensor. The sensors may be capable of wireless communication with a remote device, for example, a controller.

The method may comprise: heating the component, for example, to about 60°C, during pumping of the plurality of capsules into the internal cavity. Heating the component may reduce friction between the plurality of capsules and interior walls of the internal cavity, making it easier to pump the plurality of capsules into the internal cavity.

The method may comprise: evacuating the internal cavity prior to or during pumping of the plurality of capsules into the internal cavity. For example, the method may comprise: forming a partial vacuum within the internal cavity prior to or during pumping of the plurality of capsules into the internal cavity. A vacuum pump may be used to evacuate the internal cavity. Additionally or alternatively, the method may comprise: applying a gas back pressure on the plurality of capsules during pumping of the plurality of capsules into the internal cavity. Additionally or alternatively, the method may comprise: pumping the plurality of capsules into the internal cavity together with a foaming agent. Evacuation of the cavity, application of a gas back pressure and/or use of a foaming agent may increase a pressure gradient acting on the plurality of capsules which facilitates pumping the capsules into the internal cavity. The plurality of capsules may also be lubricated to facilitate pumping.

It will be understood that the term "machine" refers to an apparatus comprising a plurality of interacting parts which utilise mechanical power to perform a task. Components of machines may be subject to vibration. The machine may be a vehicle, for example, an aircraft, or an engine for a vehicle, for example, a gas turbine engine. It may be that the component is a gas turbine engine component, for example, a turbofan engine component. The component may be an aerofoil component such as a fan blade, compressor blade, turbine blade or guide vane, for example, for a gas turbine engine.

The component may be one of a plurality of components. For example, the component may be a fan blade of a plurality of fan blades, a compressor blade of a plurality of compressor blades, a turbine blade of a plurality of turbine blades, or a guide vane of a plurality of guide vanes. The plurality of components may be attached to, for example around, a hub. The method may be a method of filling two or more components of the plurality of components. The method may comprise filling an internal cavity of each of the two or more components sequentially. Alternatively, the method may comprise filling an internal cavity of each of the two or more components simultaneously, for example, using more than one peristaltic pump and/or more than one tube connected to a peristaltic pump.

A second aspect provides a capsule for use in a method according to the first aspect. The capsule comprises a flexible skin encapsulating a viscoelastic damping medium, one or more viscoelastic damping medium precursors, an insulating medium, or one or more insulating medium precursors.

The capsule may contain a plurality of stiffening elements. The plurality of stiffening elements may be dispersed in the viscoelastic damping medium, one or more viscoelastic damping medium precursors, insulating medium, or one or more insulating medium precursors.

The stiffening elements may be solid. The stiffening elements may be elastic. The stiffening elements may be viscoelastic. The stiffening elements may have a higher shear modulus (i.e. the stiffening elements may be formed from materials having a higher shear modulus) than the shear modulus of the viscoelastic damping medium contained by the capsules or formed from the one or more viscoelastic damping medium precursors contained by the capsules. The shear modulus of the stiffening elements (i.e. the shear modulus of the materials from which the stiffening elements are formed) may be at least 125 %, for example, at least 150 %, or at least 175 %, or at least 200 %, of the shear modulus of the viscoelastic damping medium contained by the capsules or formed from the one or more viscoelastic damping medium precursors contained by the capsules.

The stiffening elements may comprise solid particles or beads. Some or all of the stiffening elements may be substantially spherical in shape. Additionally or alternatively, some or all of the stiffening elements may have more complex three-dimensional shapes. For example, some or all of the stiffening elements may have dendritic (e.g. branched, spikey, tree-like, brush-like or snowflake-like) shapes. Some or all of the stiffening elements may be substantially spiral or helical in shape, for example, similar to helical springs. Some or all of the stiffening elements may have multiple protrusions or spikes, for example, they may be shaped like spheres covered with protrusions or spikes. Some or all of the stiffening elements may be stiffening webs.

The stiffening elements may comprise (e.g. be formed from) polymeric materials. Additionally or alternatively, the stiffening elements may comprise (e.g. be formed from) glass.

The stiffening elements may comprise (e.g. be formed from) one or more compressible materials, for example, one or more elastomeric polymers.

The capsule may contain one or more stiffening element precursors which react to form one or more stiffening elements, for example, on curing.

The viscoelastic damping medium may comprise one or more viscoelastic polymers. The viscoelastic damping medium may comprise one or more viscoelastic polymer blends. The viscoelastic damping medium may comprise one or viscoelastic copolymers. The viscoelastic damping medium may comprise one or more thermoplastic polymers. The viscoelastic damping medium may comprise one or more thermosetting polymers. The viscoelastic damping medium may comprise one or more elastomeric polymers. The viscoelastic damping medium may comprise one or more additives, such as one or more plasticizers, thickeners, stabilisers or degradation retardants. The viscoelastic damping medium may comprise one or more fillers, for example, mineral fillers.

The one or more viscoelastic damping medium precursors may form one or more viscoelastic polymers, for example, on curing. The one or more viscoelastic damping medium precursors may form one or more viscoelastic copolymers, for example, on curing. The one or more viscoelastic damping medium precursors may form one or more thermoplastic polymers, for example, on curing. The one or more viscoelastic damping medium precursors may form one or more thermosetting polymers, for example, on curing. The one or more viscoelastic damping medium precursors may form one or more elastomeric polymers, for example, on curing. The one or more viscoelastic damping medium precursors may comprise one or more additives, such as one or more plasticizers, thickeners, stabilisers or degradation retardants. The one or more viscoelastic damping medium precursors may comprise one or more fillers, for example, mineral fillers.

The viscoelastic damping medium, the one or more viscoelastic damping medium precursors, or the viscoelastic damping medium formed on curing the one or more viscoelastic damping medium precursors, may comprise one or more polyurethanes, for example, one or more branched polyurethanes. The viscoelastic damping medium, the one or more viscoelastic damping medium precursors, or the viscoelastic damping medium formed on curing the one or more viscoelastic damping medium precursors, may comprise a liquid crystal elastomer, for example, liquid crystal polysiloxane (i.e. liquid crystal silicone). The viscoelastic damping medium, the one or more viscoelastic damping medium precursors, or the viscoelastic damping medium formed on curing the one or more viscoelastic damping medium precursors, may comprise one or more polyesters, polyamides, or polyacrylates.

The one or more viscoelastic damping medium precursors may comprise one or more resins, for example, one or more epoxy resins, and optionally one or more hardeners, such as an amine hardener. For example, the one or more viscoelastic damping medium precursors may comprise bisphenol A-epichlorohydrin resin (i.e. bisphenol A-diglycidyl ether resin), optionally in combination with branched polyurethane and/or an amine hardener.

The one or more viscoelastic damping medium precursors may comprise one or more components which react (for example, on curing) to form a polyurethane. For example, the one or more viscoelastic damping medium precursors may comprise one or more linear or branched polyols and a polyisocyanate which react to form a polyurethane.

An example polyurethane-based viscoelastic damping medium is Sorbothane® which is available from Sorbothane, Inc.

The insulating medium or one or more insulating medium precursors may comprise a thermally insulating filler, such as thermally insulating fibres and/or a thermally insulating powder. The insulating medium or one or more insulating medium precursors may comprise one or more thermally insulating minerals, such as one or more thermally insulating mineral fillers. The insulating medium or one or more insulating medium precursors may comprise one or more of the following: silicon-containing minerals, for example one or more phyllosilicates such as vermiculite, mica, talc or chlorite, or diatomaceous earth or wollastonite; calcium carbonate (i.e. chalk), such as ground calcium carbonate or precipitated calcium carbonate; alumina; perlite, for example expanded perlite; glass, for example expanded glass; pumice. The thermally insulating filler may be suspended in a carrier liquid, for example, in the form of a paste or slurry.

The capsule may contain a fire retardant. For example, the capsule may contain huntite (i.e. magnesium calcium carbonate), hydromagnesite (i.e. hydrated magnesium carbonate), aluminium hydroxide and/or magnesium hydroxide.

The flexible skin may comprise (e.g. be formed from) a polymeric film. The polymeric film may be sealed to itself along one or more edges. The flexible skin may comprise (e.g. be formed from) two or more polymeric films sealed to one another along one or more edges. The flexible skin (i.e. the one or more polymeric films) may be formed from a polyvinyl alcohol.

The flexible skin may be water-soluble. The flexible skin may be partially soluble in the viscoelastic damping medium, one or more viscoelastic damping medium precursors, insulating medium and/or one or more insulating medium precursors, that is to say, the solubility of the flexible skin in the viscoelastic damping medium, one or more viscoelastic damping medium precursors, insulating medium and/or one or more insulating medium precursors may be relatively low such that the flexible skin only dissolves in the viscoelastic damping medium, one or more viscoelastic damping medium precursors, insulating medium and/or one or more insulating medium precursors over long time scales. The flexible skin may dissolve in the viscoelastic damping medium or one or more viscoelastic damping medium precursors at the curing temperature of the one or more viscoelastic damping medium precursors. The flexible skin may degrade or decompose at elevated temperatures. For example, the flexible skin may degrade or decompose above a threshold temperature. The flexible skin may remain intact below the threshold temperature. The threshold temperature may be, for example, 100°C.

The flexible skin may be from about 10 microns to about 150 microns thick.

A third aspect provides an aerofoil component for a gas turbine engine, the aerofoil component comprising an external body having an internal cavity at least partially filled with a viscoelastic damping medium having a non-uniform spatial distribution of shear modulus.

The shear modulus of the viscoelastic damping medium may be higher closer towards (e.g. at) a centre of the internal cavity.

It may be that the internal cavity comprises an inner region and an outer region. The outer region may be (i.e. located) adjacent an interior wall of the internal cavity. The interior wall may extend around the internal cavity. The interior wall may form a boundary of the internal cavity. The internal cavity may be formed within (i.e. enclosed by) the interior wall. The internal cavity may be formed between (i.e. enclosed by) two or more such interior walls. The outer region may surround the inner region. The inner region may comprise the centre of the internal cavity.

The shear modulus of the viscoelastic damping medium may be lower in the outer region than in the inner region (i.e. the shear modulus of the viscoelastic damping medium may be higher in the inner region than in the outer region).

It may be that the viscoelastic damping medium in the inner region comprises a plurality of stiffening elements. The stiffening elements may be suspended in the viscoelastic damping medium.

It may be that the viscoelastic damping medium in the outer region lacks stiffening elements. Alternatively, it may be that the viscoelastic damping medium in the outer region comprises stiffening elements. However, the viscoelastic damping medium in the outer region may comprise fewer stiffening elements than the viscoelastic damping medium in the inner region. Additionally or alternatively, the viscoelastic damping medium in the outer region may have a lower density (e.g. volume fill fraction) of stiffening elements than the viscoelastic damping medium in the inner region. Additionally or alternatively, the viscoelastic damping medium in the outer region may comprise smaller stiffening elements than the viscoelastic damping medium in the inner region. Additionally or alternatively, the viscoelastic damping medium in the outer region may comprise stiffening elements having a lower shear modulus than the stiffening elements in the viscoelastic damping medium in the inner region.

The stiffening elements may be solid. The stiffening elements may be elastic. The stiffening elements may be viscoelastic. The stiffening elements may have a higher shear modulus (i.e. the stiffening elements may be formed from materials having a higher shear modulus) than the shear modulus of the surrounding viscoelastic damping medium. The shear modulus of the stiffening elements (i.e. the shear modulus of the materials from which the stiffening elements are formed) may be at least 125 %, for example, at least 150 %, or at least 175 %, or at least 200 %, of the shear modulus of the surrounding viscoelastic damping medium. The stiffening elements may comprise solid particles or beads. Some or all of the stiffening elements may be substantially spherical in shape. Additionally or alternatively, some or all of the stiffening elements may have more complex three-dimensional shapes. For example, some or all of the stiffening elements may have dendritic (e.g. branched, tree-like, brush-like or snowflake-like) shapes. Some or all of the stiffening elements may be stiffening webs.

The internal cavity may contain more than two regions of viscoelastic damping medium having different shear moduli. For example, it may be that the internal cavity comprises a boundary region between the inner region and the outer region. The boundary region may surround the inner region. The outer region may surround the boundary region. The shear modulus of the viscoelastic damping medium in the boundary region may be lower than the shear modulus of the viscoelastic damping medium in the inner region but greater than the shear modulus of the viscoelastic damping medium in the outer region. It may be that the viscoelastic damping medium in the boundary region lacks stiffening elements. Alternatively, it may be that the viscoelastic damping medium in the boundary region comprises stiffening elements. However, the viscoelastic damping medium in the boundary region may comprise fewer stiffening elements, or a lower density (e.g. volume fill fraction) of stiffening elements, or smaller stiffening elements, or stiffening elements having a lower shear modulus, than the viscoelastic damping medium in the inner region. In embodiments in which the viscoelastic damping medium in the outer region comprises stiffening elements, it may be that the viscoelastic damping medium in the boundary region comprises more stiffening elements, or a higher density (e.g. volume fill fraction) of stiffening elements, or larger stiffening elements, or stiffening elements having a higher shear modulus, than the viscoelastic damping medium in the outer region.

Accordingly, it may be that there is a gradient of decreasing number, or density (i.e. volume fill fraction), or size, or shear modulus, of stiffening elements from the inner region, through the boundary region, to the outer region.

The viscoelastic damping medium may comprise one or more viscoelastic polymers. The viscoelastic damping medium may comprise one or more viscoelastic polymer blends. The viscoelastic damping medium may comprise one or viscoelastic copolymers. The viscoelastic damping medium may comprise one or more thermoplastic polymers. The viscoelastic damping medium may comprise one or more thermosetting polymers. The viscoelastic damping medium may comprise one or more elastomeric polymers. The viscoelastic damping medium may comprise one or more additives, such as one or more plasticizers, thickeners, stabilisers or degradation retardants. The viscoelastic damping medium may comprise one or more fillers, for example, mineral fillers.

The viscoelastic damping medium may comprise one or more polyurethanes, for example, one or more branched polyurethanes. The viscoelastic damping medium may comprise a liquid crystal elastomer, for example, liquid crystal polysiloxane (i.e. liquid crystal silicone). The viscoelastic damping medium may comprise one or more polyesters. The viscoelastic damping medium may comprise one or more polyamides. The viscoelastic damping medium may comprise one or more polyacrylates.

The viscoelastic damping medium may comprise one or more cured resins, for example, one or more cured epoxy resins. For example, the viscoelastic damping medium may comprise cured bisphenol A-epichlorohydrin resin (i.e. bisphenol A-diglycidyl ether resin), optionally further comprising branched polyurethane.

An example polyurethane-based viscoelastic damping medium is Sorbothane® which is available from Sorbothane, Inc.

It may be that at least 50 %, for example, at least 75 %, or at least 90 %, or at least 95 %, or at least 99 %, of the internal cavity is filled with the viscoelastic damping medium. It may be that the internal cavity is entirely filled with the viscoelastic damping medium.

It may be that the internal cavity is partially filled with insulating medium in addition to viscoelastic damping medium. For example, insulating medium may be located adjacent one or more interior walls of the internal cavity. The viscoelastic damping medium and/or the insulating medium may further comprise one or more fire retardants.

The external body of the aerofoil component may be formed from metal, for example, titanium or a titanium alloy.

The aerofoil component may be a fan blade, compressor blade, turbine blade or guide vane, for example, for a gas turbine engine.

A fourth aspect provides a gas turbine engine comprising a plurality of aerofoil components (e.g. fan blades, compressor blades, turbine blades or guide vanes) according to the third aspect. The gas turbine engine may be a turbofan engine.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc.

The fan of a gas turbine as described and/or claimed herein may have any desired number of fan blades, for example 16, 18, 20, or 22 fan blades.

The skilled person will appreciate that, except where mutually exclusive, a feature described in relation to any one of the above aspects may be applied *mutatis mutandis* to any other aspect. Furthermore, except where mutually exclusive, any feature described herein may be applied to any aspect and/or combined with any other feature described herein.

**Figures**

Embodiments will now be described by way of example only, with reference to the Figures, in which:

Figure 1 is a sectional side view of a gas turbine engine;

Figure 2 is a sectional side view of an outlet guide vane filled with viscoelastic damping medium;

Figure 3 is a sectional side view of an outlet guide vane prior to filling with viscoelastic damping medium;

Figure 4 is a sectional view of a capsule for use in filling an outlet guide vane with viscoelastic damping medium;

Figure 5 is a schematic illustration of an arrangement of viscoelastic damping medium capsules inside a portion of an outlet guide vane;

Figure 6 is a flowchart illustrating a method of filling a component with viscoelastic damping medium;

Figure 7 is a sectional side view of an outlet guide vane filled with viscoelastic damping medium and thermally insulating medium; and

Figure 8 is a sectional view of a capsule for use in filling an outlet guide vane with thermally insulating medium.

**Detailed description**

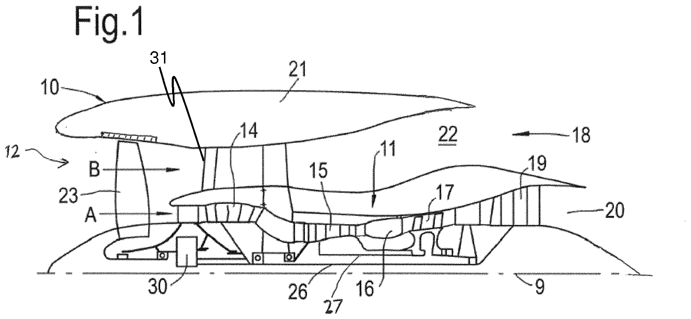

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

The nacelle 21 is secured to the engine core 11 in part by a plurality of circumferentially spaced radially extending bypass outlet guide vanes (OGVs) 31. The OGVs 31 provide a stiff structure for efficiently transferring structural loads between the nacelle 21 and the core 11 without significant weight, noise or bypass losses. The OGVs 31 also straighten the air flow B from the fan.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

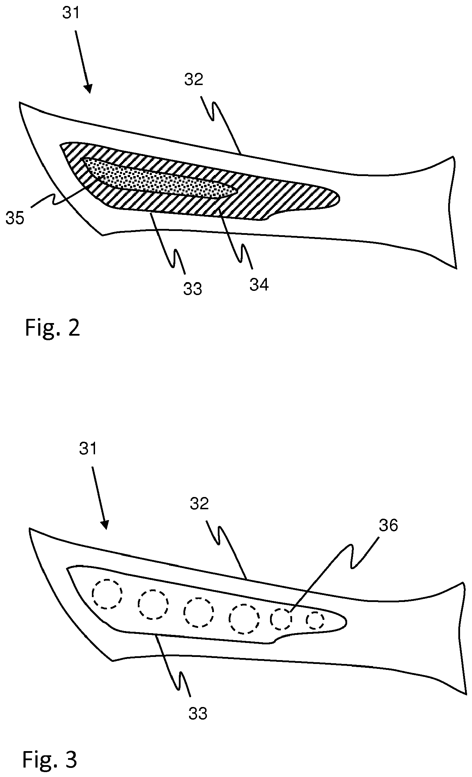

An OGV 31 is shown in more detail in cross-section in Figure 2. The OGV 31 comprises an aerofoil body 32 formed from metal, such as titanium, which incorporates a three-dimensional twist. The body 32 defines an internal cavity 33 which is filled with two regions of viscoelastic damping medium 34 and 35. Outer region 34 is formed from a polyurethane-based viscoelastic damping compound and inner region 35 is formed from the same polyurethane-based viscoelastic damping compound in which stiffening elements are dispersed. Together the regions 34 and 35 of viscoelastic damping compound fill the entire cavity 33.

In use, turbulent air exiting the fan impacts and passes through the bypass OGVs. In existing gas turbine engines, this turbulence may be a source of significant vibration of the OGVs and multiple modes of resonance. Other sources of vibration in or external to the gas turbine engine may also cause vibration of the OGVs. Such vibrations can, over time, lead to the formation and growth of fatigue cracks in the OGV metal body and eventual component failure. However, the presence of the viscoelastic damping compound in OGV 31 enables a substantial proportion of the vibrations to be damped and fatigue crack initiation and growth to be retarded.

In particular, the stiffening elements have been found to effectively increase the shear modulus or stiffness of the inner region 35 relative to the outer region 34. It has also been found that having stiffer material in the centre of the OGV and less stiff material adjacent internal walls of the inner cavity leads to more effective vibrational damping in comparison to OGVs filled with a single viscoelastic damping medium having a uniform shear modulus distribution. It is believed that use of stiffening elements in the inner region 35 also leads to more effective damping because many internal shear interfaces are formed between the stiffening elements and the surrounding viscoelastic damping compound at which vibrational energy can be dissipated.

The OGV 31 is manufactured by pumping viscoelastic damping medium precursors in an encapsulated liquid form into the internal cavity 33 of the metal body 32. The body 32 itself is formed using standard metal working and shaping processes known to the person skilled in the art. For example, the body 32 may be formed from metal sheet or cast metal.

In order to pump the viscoelastic damping medium precursors into the cavity 33, a series of apertures 36 are formed through the body 32 into the cavity 33, as shown in Figure 3. The size of the apertures 36 varies depending on location along the length of the OGV body. For example, smaller apertures may be located adjacent narrower regions of the internal cavity 33. Capsules containing viscoelastic damping medium precursors are then pumped, using peristaltic pumps, into the cavity 33 through tubes which are inserted through the apertures 36 into the cavity 33.

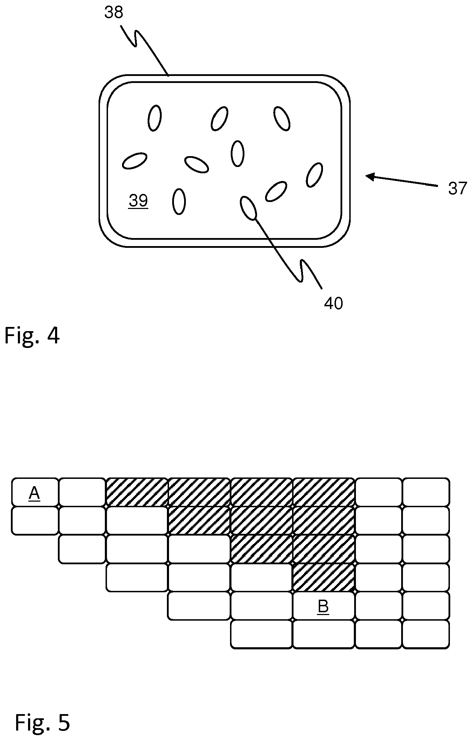

An example capsule structure 37 is shown in Figure 4. Capsule 37 includes an external skin 38 made of a polyvinyl alcohol film which encapsulates viscoelastic damping medium precursors 39 and dispersed stiffening elements 40. The skin 38 can be between about 10 μm and about 150 μm thick.

The stiffening elements 40 are generally formed from solid polymeric material. The stiffening elements 40 may have regular or irregular shapes; for example, the stiffening elements may include substantially spherical beads, irregularly shaped particles, or dendritic structures resembling brushes, Christmas trees or snowflakes. The stiffening elements 40 may include polymer webs or nets. The stiffening elements can be between about 1 $\mu$m and about 2 mm in diameter.

Peristaltically pumping capsules containing viscoelastic damping medium precursors has been found to be significantly easier than directly pumping viscoelastic damping medium precursors, which are generally highly viscous. By easier, it is meant that the process is more reliable with less equipment and/or process (i.e. filling) failure, with less stress on equipment. In addition, the combination of encapsulation within a polymeric skin and peristaltic pumping reduces damage to the stiffening elements which can occur during direct pumping. Peristaltic pumping also results in reduced capsule rupture in comparison to direct pumping of the capsules.

The placement of capsules within the cavity 33 is controlled by directing the tubes connected to the peristaltic pumps through the apertures 36 and controlling the pumping rates. Positioning aids or imaging devices such as borescopes may be used to direct placement of the tubes and consequently the arrangement of capsules within the cavity. Different apertures are used for placing different types or sizes of capsules within the cavity. For example, smaller capsules can be pumped into narrower regions of the cavity, or into outer regions of the cavity adjacent internal walls in order to provide a closer fit with the cavity walls, while larger capsules may be used to fill inner regions of the cavity. Capsules lacking stiffening elements can also be pumped around the outer regions, while capsules including stiffening elements can be used to fill the inner region. By using multiple apertures, many different arrangements of capsule size and type are possible, allowing precise control of the spatial distribution of the viscoelastic damping medium within the cavity. For example, Figure 5 shows how capsules of two different sizes (smaller capsule types A and larger capsule types B) and two different fill types (capsules including stiffening elements being indicated by cross-hatching and capsules lacking stiffening elements being unfilled) can be used to create a complex spatial distribution of shear modulus within a cavity.

Pumping of the capsules into the cavity 33 can be assisted by reducing friction between the capsules and the interior walls of the cavity through lubrication or by heating the OGV, for example, to about 60°C. Pumping can also be assisted by increasing a pressure gradient acting on the capsules, for example, by evacuating the internal cavity of air, applying a gas back pressure on the capsules in the pump, or pumping the capsules through the tubes together with a foaming agent. The OGV may be vibrated or centrifugal motion may be used to assist in filling and reducing gaps between capsules in the cavity. Because the polymer skin of the capsules is flexible, pressure on the capsules due to backfilling of the cavity can deform the capsules to the shape of the cavity, further improving filing and reducing air gaps.

Once the cavity 33 is filled with capsules, the apertures may be sealed, for example with titanium plugs. The viscoelastic damping medium precursors in the capsules is then cured by heating the OGV to the appropriate curing temperature, for example, in an autoclave. The capsule skins 37 may break or dissolve during the curing process but movement of the stiffening elements within the curing medium is low.

It will be appreciated that many different types of viscoelastic damping medium could be used to fill the internal cavity of the OGV using this method. Example viscoelastic damping media include viscoelastic polymers, such as viscoelastic thermosetting polymers or elastomers, including viscoelastic polyurethanes (e.g. branched polyurethanes), liquid crystal elastomers (e.g. liquid crystal silicone), polyesters, polyamides, polyacrylates, or epoxy resins. Depending on the choice of viscoelastic damping medium, the capsules could contain the viscoelastic damping medium *per se* (for example, where the viscoelastic damping medium is a viscoelastic liquid, such as a non-Newtonian fluid) or one or more precursors which react to form the viscoelastic damping medium (for example, epoxy resin precursors). In some examples, the capsules contain bisphenol A-epichlorohydrin resin, a branched polyurethane and an amine hardener. In some examples, the capsules contain one or more linear or branched polyols and a polyisocyanate which react with one another to form a polyurethane. In some examples, the capsules contain the polyurethane-based viscoelastic damping medium Sorbothane®, available from Sorbothane, Inc. A suitable viscoelastic damping medium does not decompose at OGV operating temperatures, for example up to about 200°C.

The polyvinyl alcohol skin of the capsules could be replaced by any suitable polymer skin having a lower shear modulus than the material (e.g. titanium) used to form the body of the OGV. The material used to form the polymer skin should, however, not generate vapour decomposition products at OGV operating temperatures, for example up to about 200°C.

The capsules may be formed using standard methods and apparatus known in the field of packaging, such as those used to form polymer-encapsulated pharmaceuticals, food products or detergents. For example, the polymer skin of the capsules may be formed by heat-sealing a polymer film. The polymer film may be heat-sealed to form a tube, the tube may be filled with the viscoelastic damping medium or precursors and/or the stiffening elements, and the tube may be then be heat-sealed to encapsulate the material. Alternatively, the capsules may be formed using additive manufacturing techniques (e.g. "3D-printing").

Similar methods may be used to fill other types of vane with viscoelastic damping media, such as outlet guide vanes located downstream of the combustion chamber or turbines or inlet guide vanes located upstream of the fan or upstream of the combustion chamber. Such methods may also be used to fill other machine components with viscoelastic damping media. For example, the method could be used to fill other gas turbine engine components such as internal cavities of fan blades or flow splitters, cavities housing sensors, or cavities formed in shields around pipes.

The method of filling a machine component cavity is illustrated as a flowchart in Figure 5. Block 100 comprises pumping capsules containing viscoelastic damping medium or viscoelastic damping medium precursors through one or more apertures into the cavity using one or more peristaltic pumps. Block 101 comprises sealing the apertures once the cavity is filled. Block 102 comprises optionally curing the capsules (where the capsules contain viscoelastic damping medium precursors) within the cavity to form a cured viscoelastic damping medium.

Similar methods may also be used to fill machine components with materials other than viscoelastic damping media. For example, such methods may be used to fill machine components with insulating media, such as thermally insulating media.

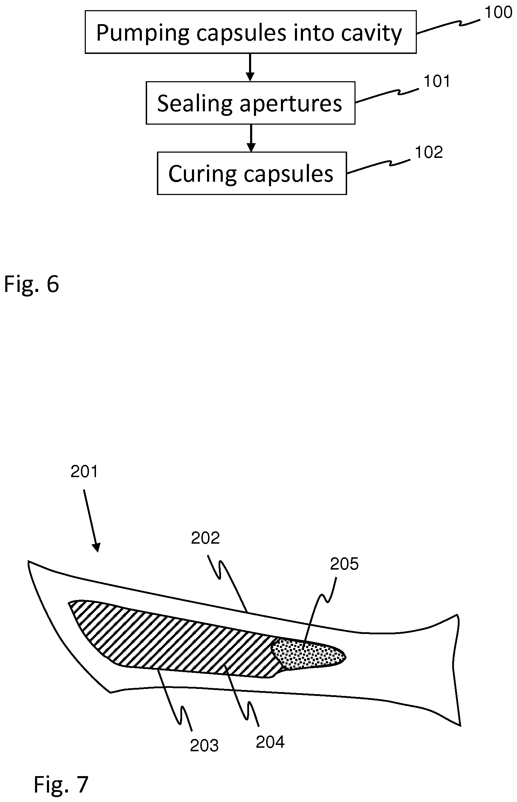

As an example, an OGV 201 is shown in cross-section in Figure 7. The OGV 201 comprises an aerofoil body 202 formed from metal, such as titanium, which incorporates a three-dimensional twist. The body 202 defines an internal cavity 203 which is filled with one region of viscoelastic damping medium 204 and one region of thermally insulating medium 205. The region of viscoelastic damping medium 204 is formed from a polyurethane-based viscoelastic damping compound. The region of thermally insulating medium 205 is formed primarily from a thermally insulating mineral filler, such as alumina or chalk. Together the regions 204 and 205 fill the entire cavity 203.

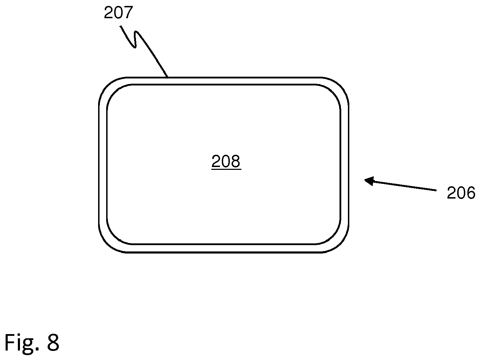

The region 205 may be filled with thermally insulating medium by peristaltically pumping capsules containing thermally insulating medium or thermally insulating medium precursors into the cavity. An example capsule structure 206 is shown in Figure 8. Capsule 206 includes an external skin 207 made of a polyvinyl alcohol film which encapsulates insulating damping medium precursors 208. The insulating damping medium precursors 208 consist of the thermally insulating mineral filler suspended in a carrier liquid. The region 204 is filled with viscoelastic damping medium by peristaltically pumping capsules containing viscoelastic damping medium or viscoelastic damping medium precursors, such as those shown in Figure 4, into the cavity.

The method may be used to direct placement of insulating media to regions of the cavity subjected to higher temperatures during use of the component. For example, insulating media may be selectively located adjacent interior cavity walls to protect viscoelastic damping media from elevated temperatures which might lead to polymer decomposition, for example.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

**Claims**

1. A method of filling an internal cavity (33, 203) of a component (31, 201) for a machine with viscoelastic damping medium (34, 35) and/or insulating medium (205), the method comprising:

   pumping a plurality of capsules (37, 206) into the internal cavity (33) using a peristaltic pump; wherein each capsule (37, 206) comprises a flexible skin (38, 207) encapsulating a viscoelastic damping medium, one or more viscoelastic damping medium precursors, an insulating medium, or one or more insulating medium precursors (39, 208).

2. The method according to Claim 1, wherein the plurality of capsules (37, 206) comprises at least two different types of capsule (A, B) having differing contents.

3. The method according to Claim 1 or Claim 2, wherein the plurality of capsules (37, 206) comprises capsules of at least two different sizes.

4. The method according to any one of the preceding claims comprising:
   directing placement of the capsules (37, 206) inside the internal cavity (33, 203) using a positioning aid.

5. The method according to any one of the preceding claims, wherein the plurality of capsules (37) comprises low shear modulus capsules (A) and high shear modulus capsules (B), the low shear modulus capsules having contents which (a) have a lower shear modulus than the contents of the high shear modulus capsules or (b) are curable to form a viscoelastic damping medium having a lower shear modulus than the viscoelastic damping medium formed on curing the contents of the high shear modulus capsules when subject to the same curing process, wherein the internal cavity (33) comprises an inner region (35) and an outer region (34), the outer region being adjacent an interior wall of the internal cavity and surrounding the inner region, and wherein the method comprises:

> arranging low shear modulus capsules in one of the inner region (35) and the outer region (34); and
> arranging high shear modulus capsules in the other of the inner region (35) and the outer region (34).

6. The method according to any one of the preceding claims, wherein the plurality of capsules (37, 206) comprises capsules containing a plurality of stiffening elements (40) dispersed in the viscoelastic damping medium, the one or more viscoelastic damping medium precursors, the insulating medium or the one or more insulating medium precursors (39, 208).

7. The method according to any one of the preceding claims further comprising:
Curing the viscoelastic damping medium, the one or more viscoelastic damping medium precursors, the insulating medium or the one or more insulating medium precursors (39, 208) in the internal cavity (33, 203), for example, by applying heat and/or pressure to the component (31, 201).

8. The method according to any one of the preceding claims comprising:
heating the component (31, 201), for example to about 60°C, during pumping of the plurality of capsules (37, 206) into the internal cavity (33, 203).

9. The method according to any one of the preceding claims comprising:

> evacuating the internal cavity (33, 203) prior to or during pumping of the plurality of capsules (37, 206) into the internal cavity (33, 203);
> applying a gas back pressure on the plurality of capsules (37, 206) during pumping of the plurality of capsules into the internal cavity (33, 203); and/or
> pumping the plurality of capsules (37, 206) into the internal cavity (33, 203) together with a foaming agent.

10. A capsule (37, 206) for use in a method according to any one of the Claims 1 to 9, the capsule comprising a flexible skin (38, 207) encapsulating a viscoelastic damping medium, one or more viscoelastic damping medium precursors, an insulating medium or one or more insulating medium precursors (39, 208).

11. The capsule (37, 206) according to Claim 10 further containing a plurality of stiffening elements (40) dispersed in the viscoelastic damping medium, the one or more viscoelastic damping medium precursors, the insulating medium or the one or more insulating medium precursors (39, 208).

12. The capsule (37) according to Claim 10 or Claim 11, wherein the viscoelastic damping medium or the one or more viscoelastic damping medium precursors (39) comprise, or are curable to form, one or more thermosetting polymers, for example, one or more polyurethanes.

13. An aerofoil component (31) for a gas turbine engine, the aerofoil component comprising an external body (32) having an internal cavity (33) at least partially filled with a viscoelastic damping medium (34, 35) having a non-uniform spatial distribution of shear modulus.

14. The aerofoil component (31) according to Claim 13, wherein the internal cavity (33) comprises an inner region (35) and an outer region (34), the outer region (34) being adjacent an interior wall of the internal cavity (33) and surrounding the inner region (35), and wherein the shear modulus of the viscoelastic damping medium is lower in the outer region (34) than in the inner region (35).

15. The aerofoil component (31) according to Claim 14, wherein the viscoelastic damping medium in the inner region (35) comprises a plurality of stiffening elements (40).

16. The aerofoil component (31) according to any one of Claims 13 to 15, wherein the viscoelastic damping medium comprises one or more thermosetting polymers, for example, one or more polyurethanes.

17. The aerofoil component (31, 201) according to any one of Claims 13 to 16, wherein the internal cavity is partially filled with an insulating medium (205) in addition to the viscoelastic damping medium.

Fig.1

Fig. 2

Fig. 3

Fig. 4

Fig. 5

Pumping capsules into cavity  ~ 100

Sealing apertures  ~ 101

Curing capsules  ~ 102

Fig. 6

Fig. 7

207

208

206

Fig. 8

Europäisches
Patentamt

European
Patent Office

Office européen
des brevets

## EUROPEAN SEARCH REPORT

Application Number

EP 19 18 9984

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 529 641 A (ROLLS ROYCE PLC [GB]) 2 March 2016 (2016-03-02) * page 13, line 16 - page 16, line 3; claims 1-20; figures 1, 4-12 * ----- | 13-17 | INV. F01D5/14 F01D5/16 F01D25/00 F04D29/66 |
| X | EP 2 014 872 A2 (ROLLS ROYCE PLC [GB]) 14 January 2009 (2009-01-14) * figure 4 * * paragraph [0020] - paragraph [0023] * * paragraph [0028] - paragraph [0031] * ----- | 13,16 | |
| A | GB 2 403 987 A (ROLLS ROYCE PLC [GB]) 19 January 2005 (2005-01-19) * the whole document * ----- | 1-17 | |

TECHNICAL FIELDS
SEARCHED (IPC)

F01D
F04D

The present search report has been drawn up for all claims

| Place of search | Date of completion of the search | Examiner |
|---|---|---|
| Munich | 17 December 2019 | Lutoschkin, Eugen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 18 9984

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2019

| Patent document cited in search report | | Publication date | Patent family member(s) | | Publication date |
|---|---|---|---|---|---|
| GB 2529641 | A | 02-03-2016 | NONE | | |
| EP 2014872 | A2 | 14-01-2009 | EP 2014872 A2 | | 14-01-2009 |
| | | | GB 2450937 A | | 14-01-2009 |
| | | | US 2009056126 A1 | | 05-03-2009 |
| GB 2403987 | A | 19-01-2005 | GB 2403987 A | | 19-01-2005 |
| | | | US 2005008492 A1 | | 13-01-2005 |

EPO FORM P0459

For more details about this annex : see Official Journal of the European Patent Office, No. 12/82